# EUROPEAN PATENT APPLICATION

(11) **EP 2 148 288 A1**
(43) Date of publication of application: **27.01.2010**
(21) Application number: 08752408.8
(22) Date of filing: 08.05.2008
(51) Int. Cl.: G06K 1/12, B23K 26/00, B41M 5/28, B41M 5/30, B41M 5/46, G06K 19/06

(54) **MARKING METHOD BY SHIELDING, MARKING METHOD BY ELIMINATING, AND MARKING METHOD BY CHANGING COLOR**

(30) Priority: 14.05.2007 JP 2007128398
(71) Applicant: B-Core Inc., Tokyo 101-0065 (JP)
(72) Inventor: KIMURA, Akiteru, Tokyo 101-0065 (JP)
(74) Representative: TBK-Patent
(86) International application number: PCT/JP2008/058517
(87) International publication number: WO 2008/143002

(57) **Abstract**

A method for more easily marking an optical recognition code is accomplished.

First, a red ribbon-shaped thread 30r, a green ribbon-shaped thread 30g and a blue ribbon-shaped thread 30b are woven into a fabric mark object 28 in three lines. Next, black embroidery patches 32a to 321 are provided in predetermined regions of the ribbon-shaped threads 30r, 30g and 30b by embroidering to partially cover and thus mask the ribbon-shaped threads 30r, 30g and 30b.

Through the above two steps, a color bit code is marked on the fabric mark object 28 by exposing the colors of the portions wherein the black embroidery patches 32a to 321 are not provided.

## Description

### Technical Field

The present invention relates to a new marking method for optical recognition codes utilizing colors.

### Background Art

For the reason that the amount of information can be increased dramatically in comparison with the classical black and white barcodes, etc., there are known a variety of color optical recognition codes utilizing chromatic colors, i.e., colors other than black, white and gray (achromatic colors).

Either the black and white barcodes or chromatic barcodes are such codes that the position and/or width of "bar" are strictly defined.

In contrast, there have been developed recently optical recognition codes not requiring a strict position and/or width (size) of each "bar", but denoting information by means of change, transition and/or combination of colors, etc..

For example, the following Patent Document 1 discloses an optical recognition code denoting information by means of color transition and combination, utilizing chromatic colors. The optical recognition code disclosed therein denotes information by affixing color to each cell, but the position and size of "cell" do not directly affect the information to be denoted. At any rate, information is denoted by the combination and transition (change) of the colors affixed to the cells. Besides, the cell called herein refers to an area with a predetermined color affixed thereto, corresponding to the "bar" of conventional barcodes.

Also, the inventors have uniquely developed, for example, optical recognition codes called "1D color bit code" (Japanese Patent Application No. 2006-196705) and "1.5D color bit code" (Japanese Patent Application No. 2006-196548) . Similar to that of the aforementioned Patent Document 1, these codes also denote information by means of color transition (change) and color combination, while the position and size of each cell are not "fixed" but given a considerable degree of freedom. In theory, the position and size are completely free. However, considering the efficiency and the like for readout, in reality, to some extent, reasonable sizes are required for the cells. Yet, as long as readout can be smoothly performed, there is not any limitation on size and position of the cells.

In this manner, the new-type optical recognition codes denoting information by means of color transition and the like are different from the conventional classical barcodes or color barcodes with colors (chromatic colors) affixed thereto (to the bars), and characterized such that the denoted data does not depend directly on size and/or shape of the marking pattern forming the code. That is, as described above, it depends solely on the sequence of marked colors or the anteroposterior relation of colors between the border portions.

Now, the present invention belongs to the field of marking technologies for such automatic recognition, and is intended to broaden the applicative scope of the automatic recognition technologies through carrying out the marking process in conventionally difficult applications by taking advantage of the characteristics of the above new-type codes.

Since the conventional barcodes denoted data by means of the width and position of black and white (dark and light), the marking methods were also required to be able to precisely denote the information of such width and position. Thereby, for conventional barcodes, the common marking method was "precise printing"; and the media for affixing barcodes thereto were paper surfaces that do not stretch, flat object surfaces (plane surfaces) of solid materials and the like.

Accordingly, since the aforementioned new-type optical recognition codes (hereinafter, such recognition codes will be referred to as "color bit code" for the sake of convenience) denote data by means of color alignment sequence only, marking means completely different from that of conventional barcodes become possible.

That is, even if a high dimensional precision is difficult to obtain for reason of the marking means itself or marking environment, as long as the color sequence is of a predetermined alignment, it is still useful as a marking method for color bit codes.

However, there is not yet known a marking method in regard to the above characteristics of the color bit codes.

### Conventional Marking Technologies

In other words, the conventional marking technologies for barcodes are also known as: printing methods, e.g., presswork, ink-jet printing, thermal transfer and the like; laser marking; and pasting of pre-marked stickers, for mark object surfaces.

However, such marking technologies are based on printers, printing machines, special marking apparatuses and the like wherein the marking conditions are strictly set up, and thereby will rather acquire a dimensional precision better than necessary when applied to color bit codes. Of curse, this does not give rise to any problems.

On the other hand, these conventional technologies have difficulties in marking for objects unstable in shape and/or positional precision such as surfaces of irregular or concave-convex shape, low positional precision and the like, thereby, in particular, failing to perform the marking itself, further requiring additional equipment and adjustment, etc..

On the contrary, as described above, since the new-type "color bit codes" do not require a high printing precision thereby being in theory able to mark even for flexible materials and concave-convex surfaces, and are characterized by being able to be read out, it is rather such marking technologies as are easy to apply to surfaces of irregular or concave-convex shape and flexible materials, that are desired.

Repeatedly speaking, the conventional marking means for automatic recognition are something like "printing" or "printer" for conventional barcodes. It could be readily understood that such means do not befit marking for flexible materials or concave-convex surfaces because in these cases endurably flat surfaces of almost un-stretchable materials are assumed.

Therefore, technologies befitting marking for other stretchable or flexible materials and concave-convex surfaces are desired. Although it can be considered as preferable means to apply widespread technologies, e.g., "rough marking", "painting", "drawing" and the like, such kind of technology is not yet known.

Further, in regard to the working environment for marking, conventional barcode marking means are limited to the environments under which printing or printer technologies can be applied, and technologies for different environments other than the above have not been developed.

### Affixing New-type Optical Recognition Codes to the Objects

Therefore, for utilizing the new-type color bit codes described above, such technologies are desirable as are able to mark even under the conditions difficult for conventional marking methods for automatic recognition (barcode marking). For example, the followings are desired:
(1) Marking for objects with difficult shapes in keeping dimensional precisions correctly;
(2) Marking under difficult environmental conditions in keeping dimensional precisions correctly; and
(3) Marking by utilizing difficult media in keeping dimensional precisions correctly.

### Phraseology

Definitions of the terms will be set forth hereinafter.

The "object" in "objects with difficult shapes" refers to an object to which an optical recognition code is affixed, and is sometimes specifically referred to as a "mark object" as well. A difficult shape refers to a surface that is not flatly and smoothly shaped and thereby difficult for common printing or pasting of a sticker thereon, e.g., surfaces that are concave-convex, textured, corrugated, fluffed and the like. Herein, the word "shape" is used to refer to, in a word, a general condition difficult for printing or pasting of a sticker.

Although such objects are difficult in keeping dimensional precisions correctly for printing, it is still greatly desired to affix color bit codes thereto.

"Difficult environmental conditions" refer to severe conditions in temperature, humidity and the like.

The "media" in "difficult media" refer to substances attached to the "objects with difficult shapes" in affixing optical recognition codes, such as, in particular, inks and the like. Others, like "peel-off stickers", "tags" and the like with optical recognition codes printed thereon, are also among the "media" referred to herein.

Further, the process of affixing an optical recognition code to an object is called "marking". For instance, according to conventional means, printing, pasting of a (peel-off) sticker, tagging or the like was a preferred example of marking.

### Conventional Related Proprietary Technologies

For example, the following Patent Document 1 shows an example of a code denoting information by means of color combination or transition.

Further, the following Patent Document 2 discloses a devisal for reading out a barcode on the new package by means of masking so as not to read out the barcode of the product in the case of shrink-wrapping a number of products, similar to the following Patent Document 3.

Further, the following Patent Document 4 discloses a shrink-wrapping package capable of masking a number of can barcodes.

[Patent Document 1]
   Japanese Unexamined Patent Application Publication No. 2003-281481.
[Patent Document 2]
   Japanese Unexamined Patent Application Publication No. 2004-323050.
[Patent Document 3]
   Japanese Unexamined Patent Application Publication No. 2003-192019.
[Patent Document 4]
   Japanese Unexamined Patent Application Publication No. 2004-083075.

### Disclosure of the Invention

### Problems to be solved by the Invention

As such, optical recognition codes are extremely usable, but may be difficult in marking for certain mark objects.

Especially, for optical recognition codes utilizing chromatic colors, as many kinds of inks or the like as the number of utilized colors had to be prepared; hence the marking process tended to be complicated. Consequently, it was difficult to perform marking right before the sales of the products, etc.; and tended to be more difficult to mark for concave-convex surfaces or the like as described above.

The present invention is configured such as is based on the circumstances described above, and an object thereof is to accomplish a marking method for optical recognition codes, easier to perform than the conventional.

A more specific object of the present invention is to accomplish an easier-to-perform marking method for optical recognition codes utilizing chromatic colors.

### Means for Solving the Problems

In order to achieve the object, the present invention provides a two-step marking method.

First, beforehand at factories or the like, attaching a colored element(s) to a mark object; next, masking the element(s) with a predetermined masking member (s) to mark (form) a final color bit code.

As such, the present invention regards as its principle the marking process being carried out in the two steps of: attaching a color (s) such as ink(s), a thread color (s) or the like, to a mark object; and masking the attached color(s), e.g., pasting a sticker(s), affixing an embroidery patch(es) or the like.

In particular, the present invention adopts the following means.

(1) In order to solve the above problems, the present invention provides an optical recognition code marking method comprising the steps of: (a1) disposing a colored element on a mark object; and (b1) disposing a masking member on the colored element, wherein an exposed region of the colored element not masked by the masking member forms an optical recognition code.

(2) Further, in order to solve the above problems, the present invention provides an optical recognition code marking method by means of decolorizing, comprising the steps of: (a2) disposing a colored element on a mark object; and (b2) removing a predetermined region of the colored element, wherein an exposed region of the colored element not removed in step (b2) forms an optical recognition code.

(3) Further, in order to solve the above problems, the present invention provides an optical recognition code marking method by means of discoloring, comprising the steps of: (a3) disposing a colored element on a mark object; and (b3) discoloring a predetermined region of the colored element, wherein a region of the colored element not discolored in step (b3) forms an optical recognition code.

(4) Further, in order to solve the above problems, the present invention provides an optical recognition code marking method by means of discoloring, comprising the steps of: (a4) disposing a light-transmissive colored element on a light-colored mark object; and (b4) discoloring a predetermined region of the mark object into a dark color, wherein a region of the colored element disposed on the mark object remaining not discolored in step (b4) forms an optical recognition code.

(5) Further, in order to solve the above problems, in the optical recognition code marking methods according to the descriptions of (1) to (3), the colored element has a chromatic color.

(6) Further, in order to solve the above problems, in the optical recognition code marking method according to the description of (5), the colored element is a chromatic thread color provided on the mark object by embroidering, the mark object being a fiber product.

(7) Further, in order to solve the above problems, in the optical recognition code marking methods according to the descriptions of (1) to (3), the colored element includes a pigment and a dye having a chromatic color.

(8) Further, in order to solve the above problems, in the optical recognition code marking method according to the description of (7), the colored element is disposed on the mark object by being printed thereon.

(9) Further, in order to solve the above problems, in the optical recognition code marking method according to any one of the descriptions of (1) and (5) to (8), the masking member has a color different from that of the colored element.

(10) Further, in order to solve the above problems, in the optical recognition code marking method according to the description of (9), the masking member is formed on the mark object by embroidering with a thread color different in color from the colored element, the mark object being a fiber product.

(11) Further, in order to solve the above problems, in the optical recognition code marking method according to any one of the descriptions of (1) and (5) to (8), the masking member is a pigment or a dye different in color from the colored element, the masking member being disposed on the mark object by printing.

(12) Further, in order to solve the above problems, in the optical recognition code marking method according to any one of the descriptions of (1) and (5) to (8), the masking member is a peel-off sticker different in color from the colored element, the masking member being disposed and fixed on the mark object.

(13) Further, in order to solve the above problems, in the optical recognition code marking method according to any one of the descriptions of (1) and (5) to (8), the masking member is a sheet member different in color from the colored element and has an opening portion; the masking member being disposed upon the mark object, and the colored element disposed thereunder being exposed through the opening portion.

(14) Further, in order to solve the above problems, in the optical recognition code marking method according to any one of above descriptions of (1) and (5) to (8), the masking member is a transparent sheet member and has a colored region different in color from the colored element on the surface or inside thereof; the masking member being disposed upon the mark object, and the colored element disposed thereunder being masked by the colored region.

(15) Further, in order to solve the above problems, in the optical recognition code marking method according to the description of (2), the colored element of the predetermined region in step (b2) is removed by excavating the predetermined region of the mark object.

(16) Further, in order to solve the above problems, in the optical recognition code marking method according to the description of (2), the colored element of the predetermined region in step (b2) is removed by forming an opening portion in the predetermined region of the mark object.

(17) Further, in order to solve the above problems, in the optical recognition code marking method according to the description of (3), the colored element of the predetermined region in step (b3) is discolored by heating.

(18) Further, in order to solve the above problems, in the optical recognition code marking method according to the description of (3), the colored element of the predetermined region in step (b3) is discolored by light irradiating.

(19) Further, in order to solve the above problems, in the optical recognition code marking method according to the description of (4), the predetermined region of the mark object in step (b4) is discolored into a dark color by heating, the color of the colored element disposed in the other region of the mark object not discolored being displayed to the outside.

(20) Further, in order to solve the above problems, in the optical recognition code marking method according to the description of (4), the predetermined region of the mark object in step (b4) is discolored into a dark color by light irradiating, the color of the colored element disposed in the other region of the mark object not discolored being displayed to the outside.

### Advantages

As described above, according to the present invention, it is possible to carry out the marking process easily by disposing a colored element on a mark object beforehand and then disposing a black masking member or the like thereon to form an optical recognition code.

In particular, for optical recognition codes utilizing colors, it was conventionally necessary to carry out the marking process in controlling each utilized color for each code respectively. However, according to the present invention, it is only necessary to control the black color (or ground color) different in color from the colored element for the code, thereby facilitating an easy-to-perform marking process.

### Brief Description of Drawings

Figs. 1A and 1B are explanatory diagrams showing an example of accomplishing a color bit code by covering strip-shaped color ribbons or linear materials by means of printing or with other members in accordance with a first embodiment of the present invention;
Figs. 2A and 2B are explanatory diagrams showing an example of accomplishing a color bit code by covering strip-shaped color ribbons or linear materials by means of printing or with other members in accordance with a second embodiment of the present invention;
Figs. 3A and 3B are explanatory diagrams showing an example of accomplishing a color bit code by covering a paper surface with color strips printed thereon by means of a paper with opening portions formed therein in accordance with a third embodiment of the present invention;
Figs. 4A and 4B are explanatory diagrams showing an example of accomplishing a color bit code by covering a paper surface with color strips printed thereon by means of a transparent sheet-shaped member with masking regions formed thereon in accordance with a fourth embodiment of the present invention;
Figs. 5A, 5B and 5C are explanatory diagrams showing an example of accomplishing a color bit code by forming excavated portions in a wooden board with color strips painted thereon in accordance with a fifth embodiment of the present invention;
Figs. 6A, 6B and 6C are explanatory diagrams showing an example of accomplishing a color bit code by forming opening portions in a wooden board with color strips painted thereon in accordance with a sixth embodiment of the present invention;
Figs. 7A to 7D are explanatory diagrams showing an example of accomplishing a color bit code by forming dark color regions on a thermal paper with color strips printed thereon in accordance with a seventh embodiment of the present invention; and
Figs. 8A to 8D are explanatory diagrams showing an example of accomplishing a color bit code by forming dark color regions on color strips printed on a paper in accordance with an eighth embodiment of the present invention.

### Reference Numerals

- 28: Mark object
- 30: Ribbon-shaped threads
- 30r: Red ribbon-shaped thread
- 30b: Blue ribbon-shaped thread
- 30g: Green ribbon-shaped thread
- 32a to 321: Black embroidery patches
- 38: Fabric mark object
- 40: Ribbon-shaped threads
- 40r: Red ribbon-shaped thread
- 40b: Blue ribbon-shaped thread
- 40g: Green ribbon-shaped thread
- 42a to 42r: Black embroidery patches
- 48: Paper mark object
- 50: Printed color strips
- 50r: Red color strip
- 50b: Blue color strip
- 50g: Green color strip
- 52a: Masking paper
- 52b to 52x: Opening portions
- 58: Paper mark object
- 60: Printed color strips
- 60r: Red color strip
- 60b: Blue color strip
- 60g: Green color strip
- 62a: Transparent sheet
- 62b to 62m: Black masking regions
- 65: End mill
- 68: Wooden board
- 70r: Red color strip
- 70b: Blue color strip
- 70g: Green color strip
- 72a to 72d: Excavated portions
- 75: Drill
- 78: Wooden board
- 80r: Red color strip
- 80b: Blue color strip
- 80g: Green color strip
- 82a to 82d: Opening portions
- 85: Thermal head
- 88: Thermal paper
- 89a to 89c: Dark color regions
- 90r: Red color strip
- 90b: Blue color strip
- 90g: Green color strip
- 92a to 92h: Dark color regions
- 94a to 94f: Areas
- 95: Laser head
- 98: Paper
- 100r: Red color strip
- 100b: Blue color strip
- 10g: Green color strip
- 101a to 101c: Dark color regions
- 102a to 102h: Dark color regions
- 104a to 104f: Areas
- C-C': Cross section
- C"-C"': Cross section

### Best Modes for Carrying Out the Invention

Hereinafter, referring to the drawings, preferred embodiments of color bit code marking in accordance with the present invention will be described in detail.

### A First Embodiment

In the first embodiment, an example of accomplishing a color bit code by embroidering a mark object in such a manner as weaving color threads thereinto will be described. A characteristic point of the first embodiment is to mark an optical recognition code by exposing and masking the color threads.

In the first embodiment, the color bit code is accomplished by first disposing strip-shaped color ribbons or linear materials on a mark object and next covering the same with other masking members disposed thereon. These ribbons or linear materials correspond to a preferred example of the colored element of the claims of the present invention.

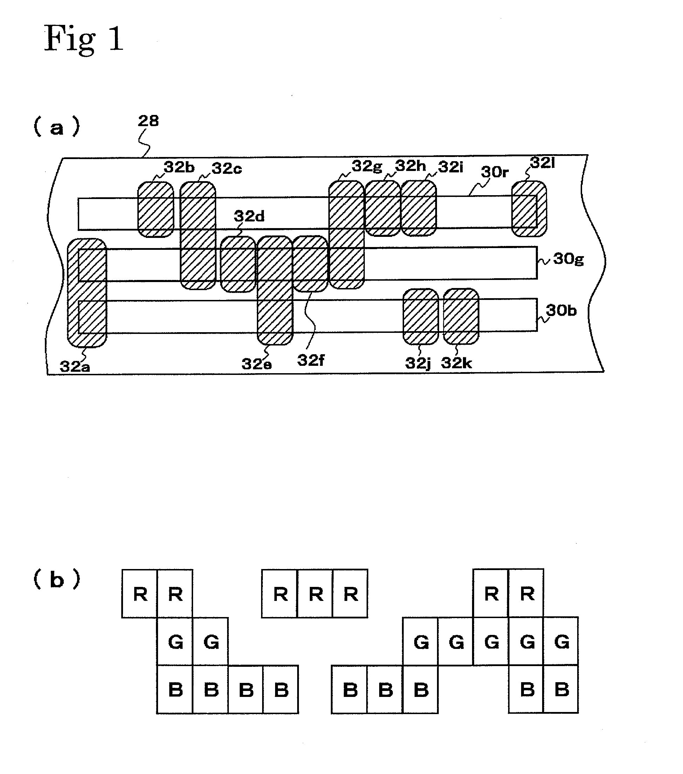

Figs. 1A and 1B show an appearance of the example, wherein:
(1) First, ribbon-shaped threads 30 are woven into a fabric mark object 28;

(2) Next, predetermined regions on the ribbon-shaped threads 30 are covered and thus masked with black embroidery patches 32a to 321.

Through the above two steps, a color bit code is marked on the fabric mark object 28 as shown herein.

Meanwhile, "a color bit code" is used in this document as a generic term to mean "an optical recognition code denoting information by means of combination, transition and/or change of color(s), wherein the size and/or width of each color area (cell) do not directly affect the information to be denoted".

Now, as shown in Fig. 1A, a red ribbon-shaped thread 30r, a green ribbon-shaped thread 30g and a blue ribbon-shaped thread 30b are woven into the fabric mark object 28 in three lines. Further, black embroidery patches 32a to 321 are provided by embroidering at predetermined positions.

As a result, colors of the portions wherein the embroidery patches 32a to 321 are not provided are exposed to the outside and thereby a color bit code can be formed. As shown in Fig. 1B, a color bit code is obtained by virtue of such black embroidery patches 32a to 321, wherein the cells are represented by rectangles marked with R, G and B, respectively.

In addition, although the example shown herein is of an optical recognition code called "1.5D color bit code" (Japanese Patent Application No. 2006-196548), it is also preferable, of course, to adopt other code systems.

According to such means, color bit codes can be easily marked for fiber products by weaving the chromatic ribbon-shaped threads 30 thereinto beforehand at factory shipment and providing the black embroidery patches 32a to 321 thereon by embroidering afterwards at retail stores.

Further, although the black embroidery patches 32a to 321 are utilized herein, patches of the same color as the ground color of the fabric mark object 28 are also preferable.

At retail stores, preparations of means for marking of various colors tend to be cumbersome and complicated labors, making a burden heavier. However, according to the first embodiment, since it is sufficient to just prepare the means for affixing the black embroidery patches 32a to 321 at retail stores, an optical recognition code utilizing chromatic colors can be marked in an extremely simple manner, thereby making it possible to establish a highly convenient system.

In addition, the red, blue and green ribbon-shaped threads 30r, 30b and 30g correspond to a preferred example of the colored element set forth in the claims of the present invention. Further, being ribbon shaped represents a preferred example of the element. Further, the black embroidery patches 32a to 321 correspond to a preferred example of the masking member set forth in the claims of the present invention. Furthermore, utilizing patches of the same color as that of the fabric mark object, instead of the black embroidery patches 32a to 321, is also preferable not only in design but also in regard to improving the precision of reading out the code.

### A Second Embodiment

Likewise, another example of accomplishing a color bit code by covering strip-shaped color ribbons or linear materials by means of printing or with other members will be described.

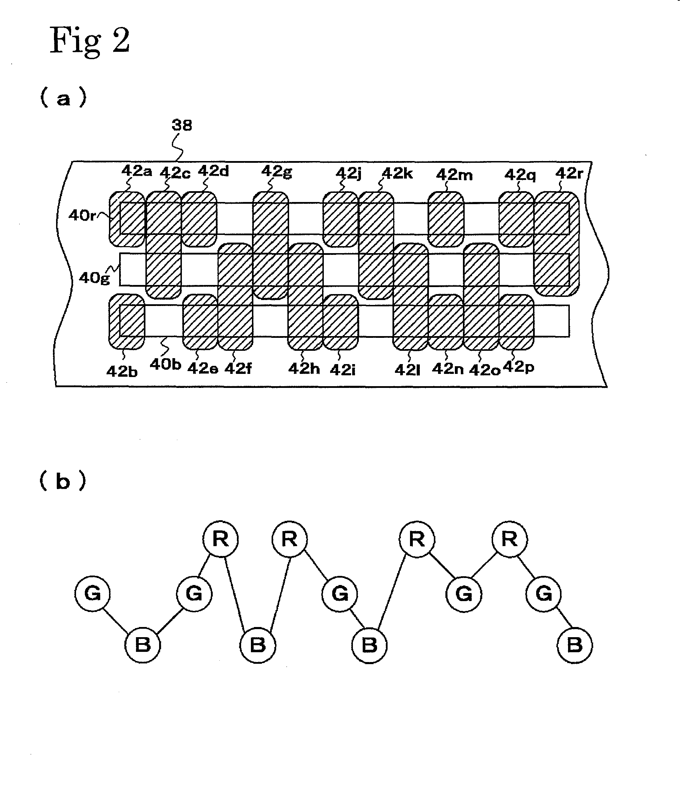

As shown in Fig. 2A, first, a red ribbon-shaped thread 40r, a green ribbon-shaped thread 40g and a blue ribbon-shaped thread 40b are woven into a fabric mark object 38 in three lines. Further, black embroidery patches 42a to 42r are provided by embroidering at predetermined positions.

As a result, colors of the portions wherein embroidery patches 42a to 42r are not provided are exposed to the outside and thereby a color bit code can be formed. As shown in Fig. 2B, a color bit code is obtained by virtue of such black embroidery patches 42a to 42r, wherein the cells are represented by rectangles marked with R, G and B, respectively.

In addition, although the example shown herein is of an optical recognition code such as the so-called "1D color bit code" (Japanese Patent Application No. 2006-196705), it is also preferable, of course, to adopt other code systems.

### A Third Embodiment

In the third embodiment, an example of accomplishing a color bit code by overlaying a masking paper having opening portions on a paper surface with color strips printed thereon will be described. In the third embodiment, a characteristic point is that an optical recognition code can be marked by such a simple method as forming holes in the masking paper and thereby exposing the colors of the color strips disposed thereunder to the outside through the opening portions.

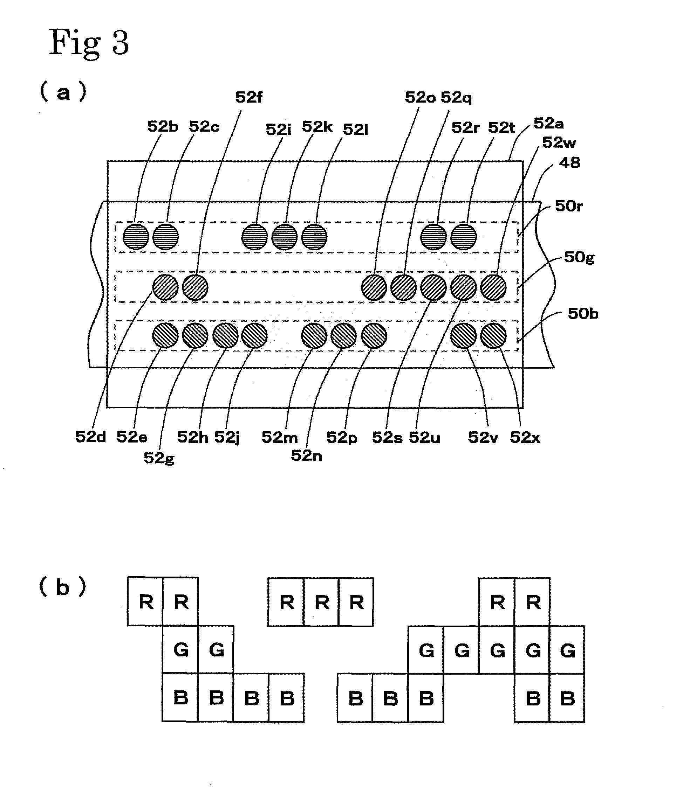

As shown in Fig. 3A, first, a red color strip 50r, a green color strip 50g and a blue color strip 50b are printed on a paper mark object 48 in three lines.

Further, on the paper mark object 48 is disposed a white masking paper 52a, in which opening portions 52b to 52x are formed at predetermined positions.

As a result, colors of the color strips 50r, 50g and 50b positioned under the opening portions 52b to 52x are exposed to the outside through the opening portions and thereby a color bit code can be formed. As shown in Fig. 3B, a color bit code is obtained by virtue of such masking paper 52a, wherein the cells are represented by rectangles marked with R, G and B, respectively.

In addition, although the example shown herein is of an optical recognition code called "1.5D color bit code" (Japanese Patent Application No. 2006-196548), it is also preferable, of course, to adopt other code systems.

Further, although the opening portions 52b to 52x are circular in the example shown herein, opening portions may be formed in any shape as long as the colors of the color strips positioned thereunder can be exposed to the outside.

According to such means, in the case of mailing a letter or the like, for example, a mailing customer barcode or the like can be simply displayed to the outside by putting the letter paper with color strips printed beforehand thereon into an envelop with holes formed therein.

### A Fourth Embodiment

Likewise, an example of accomplishing a color bit code by covering a paper surface with color strips printed thereon, with a transparent sheet-shaped member with masking regions formed thereon will be described.

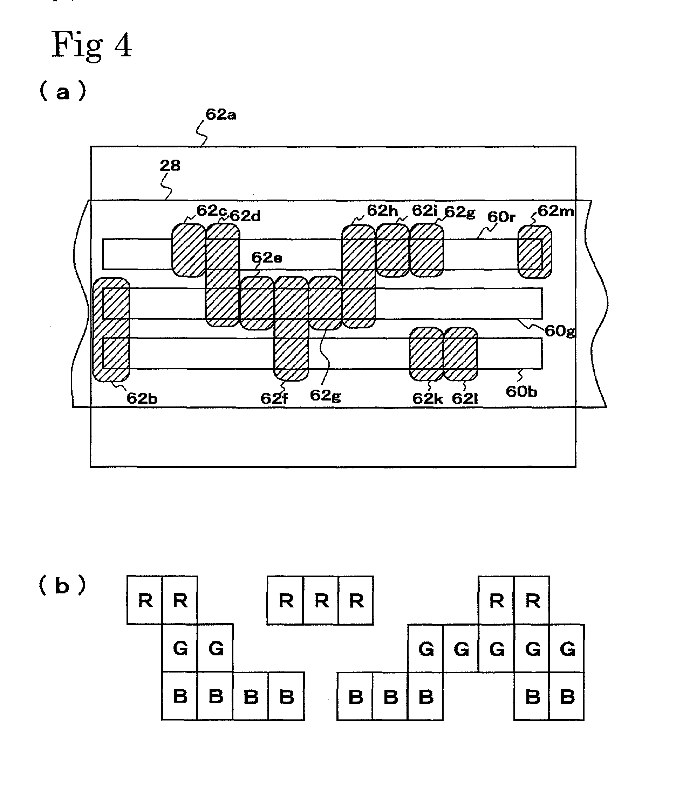

As shown in Fig. 4A, first, a red color strip 60r, a green color strip 60g and a blue color strip 60b are printed on a paper mark object 58 in three lines.

Next, on the paper mark object 58 is disposed a transparent sheet 62a made of plastic, on which black masking regions 62b to 62m are provided by printing at predetermined positions.

As a result, colors of the portions wherein the masking regions 62b to 62m are not provided are displayed to the outside and thereby a color bit code can be formed. As shown in Fig. 4B, a color bit code is obtained by virtue of such masking regions 62b to 62m, wherein the cells are represented by rectangles marked with R, G and B, respectively.

In addition, although the example shown herein is of an optical recognition code such as the so-called "1.5D color bit code" (Japanese Patent Application No. 2006-196548), it is also preferable, of course, to adopt other code systems.

### A Fifth Embodiment

In the fifth embodiment, an example of accomplishing a color bit code by excavating with an end mill or the like predetermined portions in a wooden board with color strips painted thereon will be described.

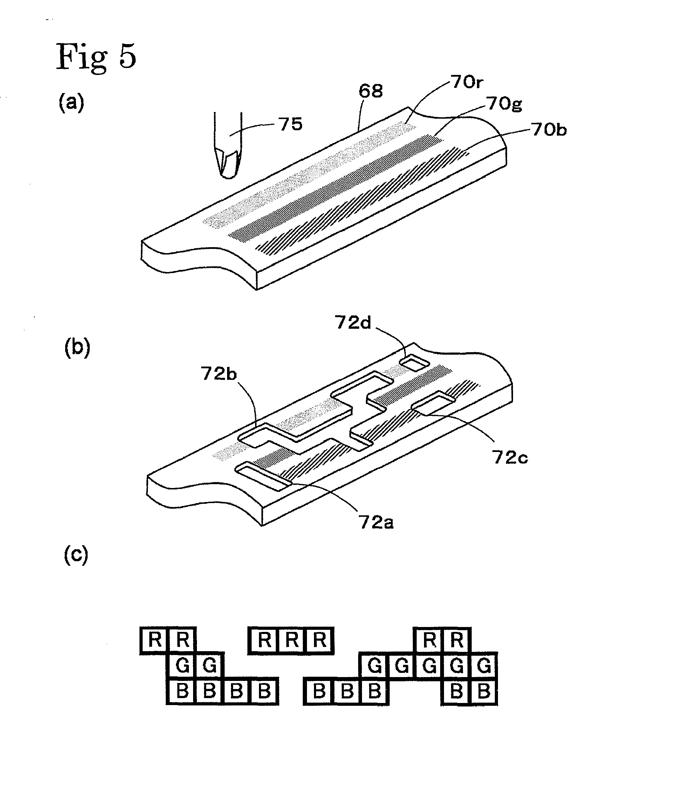

As shown in Fig. 5A, first, a red color strip 70r, a green color strip 70g and a blue color strip 70b are drawn with paints on a wooden board 68 in three lines.

Next, predetermined portions on the wooden board 68 are excavated with an end mill 65. Thereby, as shown in Fig. 5B, excavated portions 72a to 72d are formed in the surface of the wooden board 68.

As a result, colors of the portions wherein the excavated portions 72a to 72d are not formed remain on the wooden board 68 and thereby a color bit code can be formed. In this manner, a color bit code as shown in Fig. 5C is obtained by forming the excavated portions 72a to 72d, wherein the cells are represented by rectangles marked with R, G and B, respectively.

In addition, although the example shown herein is of an optical recognition code such as the so-called "1. 5D color bit code" (Japanese Patent Application No. 2006-196548), it is also preferable, of course, to adopt other code systems.

### A Sixth Embodiment

In the sixth embodiment, an example of accomplishing a color bit code by forming with a drill or the like opening portions at predetermined positions in a wooden board with color strips painted thereon will be described.

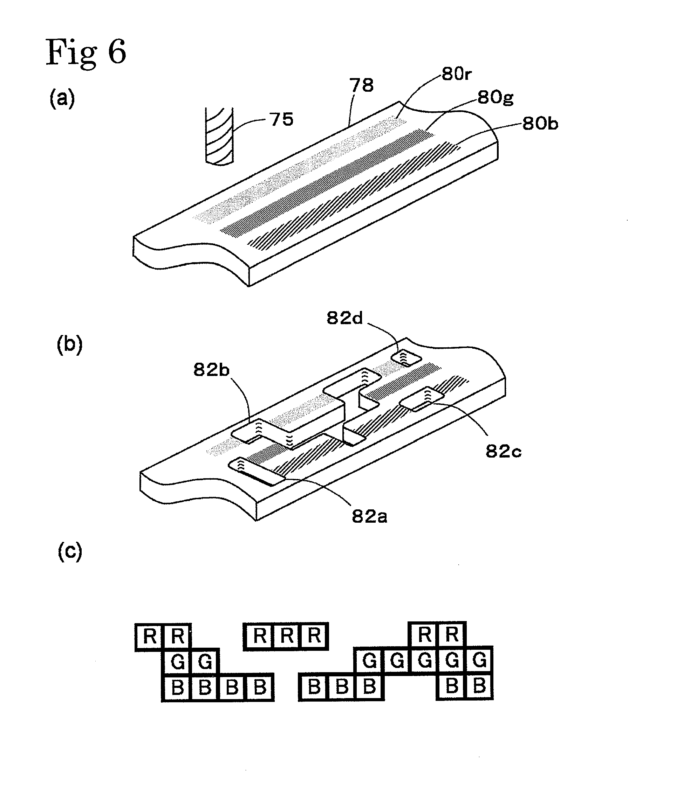

As shown in Fig. 6A, first, a red color strip 80r, a green color strip 80g and a blue color strip 80b are drawn with paints on a wooden board 78 in three lines.

Next, opening portions are formed by utilizing a drill 75 at predetermined positions in the wooden board 78. Thereby, as shown in Fig. 6B, opening portions 82a to 82d are formed.

As a result, colors of the portions wherein the opening portions 82a to 82d are not formed remain on the wooden board 78 and thereby a color bit code can be formed. In this manner, a color bit code as shown in Fig. 6C is obtained by forming the opening portions 82a to 82d, wherein the cells are represented by rectangles marked with R, G and B, respectively.

In addition, although the example shown herein is of an optical recognition code such as the so-called "1. 5D color bit code" (Japanese Patent Application No. 2006-196548), it is also preferable, of course, to adopt other code systems.

### A Seventh Embodiment

In the seventh embodiment, an example of accomplishing a color bit code by heating with a thermal head or the like predetermined regions on a thermal paper with light-transmissive colored elements printed thereon in strips, and thus discoloring the predetermined regions will be described.

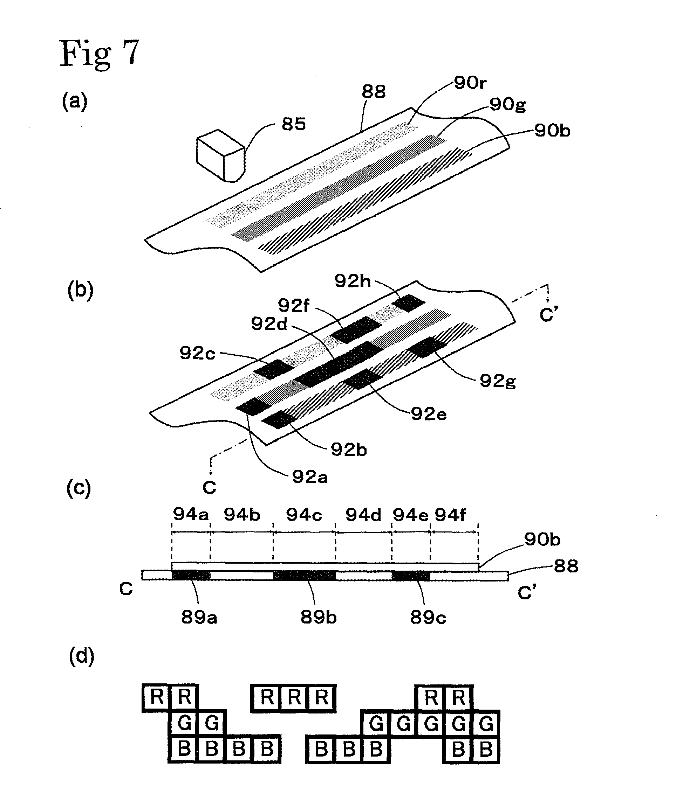

As shown in Fig. 7A, first, a red color strip 90r, a green color strip 90g and a blue color strip 90b are printed on a light-colored (e.g., white color) thermal paper 88 in three lines. Each color strip is light-transmissive. As light will be reflected from the thermal paper 88, the red color strip 90r, green color strip 90g and blue color strip 90b can be recognized as red, green and blue respectively with the unaided eye.

Next, by heating with a thermal head 85 predetermined regions of the thermal paper 88, wherein the color strips 90r, 90g and 90b are printed, and thus discoloring the predetermined regions into a dark color, the dark color can thereby be displayed to the outside. The portions discolored from the light color to a dark color (e. g. , black) are dark color regions 92a to 92h. As shown in Fig. 7B, the dark color regions 92a to 92h are formed on the thermal paper 88.

Further, Fig. 7C shows a cross section taken along the line C-C' of Fig. 7B. By means of the thermal head 85, the predetermined regions on the thermal paper 88 are heated, thereby forming dark color regions 89a to 89c, which do not reflect light and thereby do not display colors. In particular, areas 94a, 94c and 94e are black. On the contrary, regions wherein the dark color regions are not formed reflect light; therefore, the color of the light-transmissive blue strip disposed on the thermal paper 88 can be recognized therefrom with the unaided eye.

As a result, colors of the color strips of the regions remaining not discolored are displayed to the outside. Thereby, a color bit code is obtained as shown in Fig. 7D, wherein the cells are represented by rectangles marked with R, G and B, respectively.

In addition, although the example shown herein is of an optical recognition code such as the so-called "1.5D color bit code" (Japanese Patent Application No. 2006-196548), it is also preferable, of course, to adopt other code systems.

### An Eighth Embodiment

In the eighth embodiment, an example of accomplishing a color bit code by irradiating with a laser beam by a laser head or the like predetermined regions on a paper with printed thereon in strips colored elements having a nature of discoloring under irradiation of a predetermined intense light, and thus discoloring the predetermined regions.

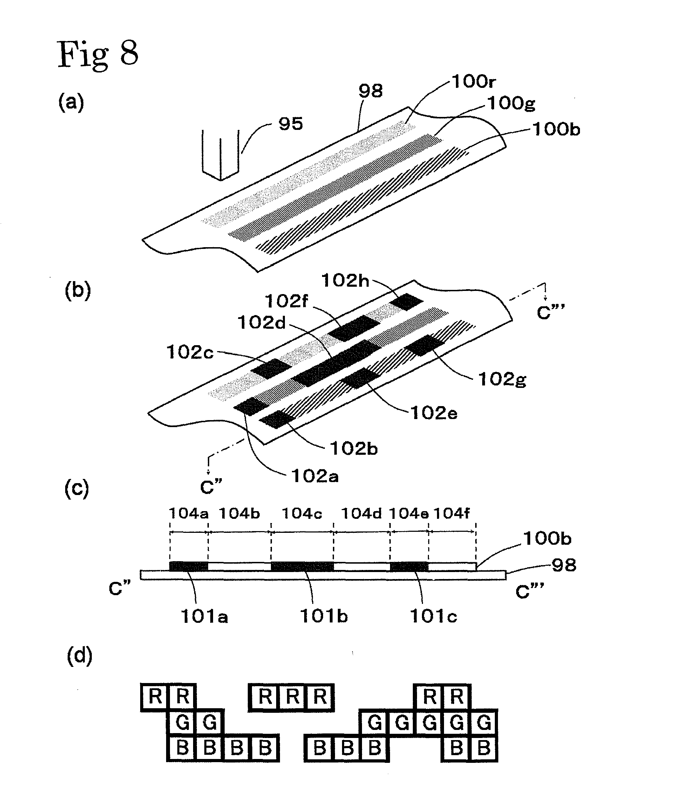

As shown in Fig. 8A, a red color strip 100r, a green color strip 100g and a blue color strip 100b are printed on a paper 98 in three lines. The red color strip 100r, green color strip 100g and blue color strip 100b are colored elements, each having a nature of discoloring under light irradiation.

Next, the colored elements are irradiated with a laser beam by a laser head 95 in the predetermined regions, and thus discolored from the light colors into a dark color. The portions discolored from the light colors into a dark color are dark color regions 102a to 102h. As shown in Fig. 8B, the dark color regions 102a to 102h are formed in the colored elements.

Further, Fig. 8C shows a cross section taken along the line C"-C"' of Fig. 8B. By means of the laser head 95, the blue color strip 100b is irradiated with a laser beam, thereby forming discolored regions 101a to 101c therein. In particular, areas 104a, 104c and 104e are discolored into black. On the other hand, because areas 104b, 104d and 104f are not discolored, the color of the blue color strip can be recognized therefrom as ever with the unaided eye.

As a result, colors of the color strips remaining not discolored are displayed to the outside. Thereby, a color bit code is obtained as shown in Fig. 8D, wherein the cells are represented by rectangles marked with R, G and B, respectively.

In addition, although the example shown herein is of an optical recognition code such as the so-called "1.5D color bit code" (Japanese Patent Application No. 2006-196548), it is also preferable, of course, to adopt other code systems.

### Modifications

Although embroidery examples are shown in the first and second embodiments described above, various other means can be applied such as printing, pasting of stickers and the like as long as the object can be covered. Further, preferred materials and means can be selected according to the nature or other conditions of the mark object.

For example, it is also preferred to cover and thus mask by printing with inks different in color from the colored elements. Such inks can be made from pigments and/or dyes. That is, the pigments or dyes are a preferred example of the masking member set forth in the claims of the present invention.

Further, for example, it is also preferred to cover the ribbons or thread materials with peel-off stickers different in color from the colored elements. Such peel-off stickers are a preferred example of the masking member set forth in the claims of the present invention.

Further, although an example of utilizing a paper as the masking sheet is shown in the third embodiment described above, members of various materials and various means can be applied such as plastic sheets, thin plates or the like, as long as the object can be covered. Further, preferred materials and means can be selected according to the nature or other conditions of the mark object.

For example, it is also preferred to cover and thus mask by overlaying on the mark object a paper different in color from the colored elements and with predetermined opening portions formed therein. That is, such paper is a preferred example of the masking member set forth in the claims of the present invention.

Further, although an example of utilizing a transparent sheet made of plastic as the transparent sheet is shown in the fourth embodiment described above, various materials and means can be applied such as glass plates and the like as long as the colors of the colored elements can be transmitted to the outside. Further, preferred materials and means can be selected according to the nature or other conditions of the mark object.

Further, although another example of forming masking regions by printing is shown in the fourth embodiment described above, other means and materials can be applied as long as the masking regions can be formed. For example, it is also a preferred example to apply such means as forming the masking regions by pasting stickers on the transparent sheet, marking on the transparent sheet with markers, and the like. Further, preferred materials and means can be selected according to the nature or other conditions of the mark object.

Further, although examples of forming excavated portions and opening portions in wooden boards are shown in the fifth and sixth embodiments described above, other means and materials can be applied as long as the excavated portions or opening portions can be formed. For example, it is also a preferred example to apply such means as forming the excavated portions or opening portions in printed wiring boards or metallic boards. Further, preferred materials and means can be selected according to the nature or other conditions of the mark object.

Further, although examples of painting colors with paints are shown in the fifth and sixth embodiments described above, other means and materials can be applied as long as the colored elements can be formed. For example, it is also a preferred example to form the colored elements by utilizing metallic foils, conductive inks, ink-jet printer inks, pigments, or dyes. Further, preferred materials and painting methods can be selected according to the nature or other conditions of the mark object.

Further, although an example of forming dark color regions (e.g., black) on a light-colored (e.g., white) thermal paper is shown in the seventh embodiment described above, other means and materials can be applied as long as the dark color regions can be formed by heating or light irradiating. For example, it is also a preferred example to configure the mark object by utilizing a pigment subject to discoloring into a dark color under light irradiation. Further, preferred materials and disposing methods can be selected according to the natures or other conditions of the mark object and the colored elements.

Further, although white is given as a light-colored example in the seventh embodiment described above, any light color may be applied as long as light is reflected therefrom. For example, colors high in optical reflectivity such as cream color, ivory white, silver and the like are also preferable.

Further, although black is given as a dark color example in the seventh embodiment described above, any color may be applied as long as light is almost not reflected therefrom. For example, dark gray color and the like are also preferable.

Further, although an example of forming discolored regions by printing on a paper and then irradiating with a predetermined intense light the colored elements having a nature of discoloring under light irradiation is shown in the eighth embodiment described above, other means and materials can be applied as long as the discolored regions can be formed by heating or light irradiating. For instance, it is also a preferred example to form the colored elements with pigments subject to discoloring under heating. Further, materials for the colored elements and means for painting can be arbitrarily selected as long as the discolored regions are different in color from the colored elements. Furthermore, preferred materials and disposing methods can be selected according to the natures or other conditions of the mark object and the colored elements. That is, any colors can be utilized as long as are different from that applied to marking.

In this manner, an optical recognition code can be marked by first disposing colored elements (thread colors, color ribbons or linear materials, light-transmissive inks, etc.) on a mark object (fabric, wooden board, printed wiring board, thermal paper, paper, etc.); and next covering the colored elements with a masking member(s) (black embroideries or the like, printing, stickers, paper having opening portions, transparent sheet provided with masking regions, etc.) or by forming opening portions, excavating, discoloring by heating or light irradiating, etc.. Masking members of the same color as that of the mark object are also preferred.

### Timing of Marking

Now, according to the embodiments, it is possible to adopt such methods as providing colored elements on a mark object beforehand and marking a desired optical recognition code right before sales by utilizing a masking member(s) afterwards. If such methods are applied, at sales sites, marking can be carried out right before sales by only preparing, for example, some black markers or the like, thereby facilitating a highly convenient marking process.

In particular, when such system is adopted, it is possible to deal flexibly with changes (increase) in number of the utilized colors, etc.. This is because complicated works such as affixing colored elements to the mark objects are done collectively at factories or the like, and the final marking process is carried out with the single-color masking members only. Therefore, changes can be handled and finished just at factories or the like. Thus, it is possible to deal flexibly with changes in number of colors and the like without changing the system at retail stores.

## Claims

1. A method for marking an optical recognition code, the method comprising the steps of:
(a1) disposing a colored element on a mark object; and
(b1) disposing a masking member on the colored element,
an exposed region of the colored element not masked by the masking member forming the optical recognition code.

2. A method for marking an optical recognition code by means of decolorizing, the method comprising the steps of:
(a2) disposing a colored element on a mark object; and
(b2) removing a predetermined region of the colored element,
an exposed region of the colored element not removed in step (b2) forming the optical recognition code.

3. A method for marking an optical recognition code by means of discoloring, the method comprising the steps of:
(a3) disposing a colored element on a mark object; and
(b3) discoloring a predetermined region of the colored element,
a region of the colored element not discolored in step (b3) forming the optical recognition code.

4. A method for marking an optical recognition code by means of discoloring, the method comprising the steps of:
(a4) disposing a transparent colored element on a light-colored mark object; and
(b4) discoloring a predetermined region of the mark object into a dark color,
a region of the colored element disposed on the mark object remaining not discolored in step (b4) forming the optical recognition code.

5. The methods according to claims 1 to 3, wherein the colored element has a chromatic color.

6. The method according to claim 5, wherein the colored element is a chromatic thread color provided on the mark object by embroidering.

7. The methods according to claims 1 to 3, wherein the colored element includes a pigment and a dye having a chromatic color.

8. The method according to claim 7, wherein the colored element is disposed on the mark object by being printed thereon.

9. The method according to any one of claims 1 and 5 to 8, wherein the masking member has a color different from that of the colored element.

10. The method according to claim 9, wherein the masking member is formed by embroidering the mark object with a thread color having a color different from that of the colored element, the mark object being a fiber product.

11. The method according to any one of claims 1 and 5 to 8, wherein the masking member is a pigment or a dye different in color from the colored element, the masking member being disposed on the mark object by printing.

12. The method according to any one of claims 1 and 5 to 8, wherein the masking member is a peel-off sticker different in color from the colored element, the masking member being disposed and fixed on the mark object.

13. The method according to any one of claims 1 and 5 to 8, wherein the masking member is a sheet member different in color from the colored element and has an opening portion; the masking member being disposed upon the mark object, and the colored element disposed thereunder being exposed through the opening portion.

14. The method according to claims 1 and 5 to 8, wherein the masking member is a transparent sheet member and has a colored region different in color from the colored element on the surface or inside thereof; the masking member being disposed upon the mark object, and the colored element disposed thereunder being masked by the colored region.

15. The method according to claim 2, wherein the colored element of the predetermined region in step (b2) is removed by excavating the predetermined region of the mark object.

16. The method according to claim 2, wherein the colored element of the predetermined region in step (b2) is removed by forming an opening portion in the predetermined region on the mark object.

17. The method according to claim 3, wherein the colored element of the predetermined region in step (b3) is discolored by heating.

18. The method according to claim 3, wherein the colored element of the predetermined region in step (b3) is discolored by light irradiating.

19. The method according to claim 4, wherein the predetermined region of the mark object in step (b4) is discolored into a dark color by heating, the color of the colored element disposed in the other region of the mark object not discolored being displayed to the outside.

20. The method according to claim 4, wherein the predetermined region of the mark object in step (b4) is discolored into a dark color by light irradiating, the color of the colored element disposed in the other region of the mark object not discolored being displayed to the outside.
